# EUROPEAN PATENT SPECIFICATION

(11) **EP 2 214 477 B1**
(45) Date of publication and mention of the grant of the patent: **29.05.2013**
(21) Application number: 08843436.0
(22) Date of filing: 28.10.2008
(51) Int. Cl.: A01M 25/00

(54) **BAIT STATION**
KÖDERSTATION
POSTE D'APPÂT

(30) Priority: 30.10.2007 GB 0721244
(43) Date of publication of application: 11.08.2010
(73) Proprietor: Killgerm Group Limited, Ossett West Yorkshire WF5 9NA (GB)
(72) Inventor: HOYES, Paul, Sheffield S36 9NX (GB)
(74) Representative: Craven, Ian
(86) International application number: PCT/GB2008/003650
(87) International publication number: WO 2009/056817

(56) References cited:
- FR-A- 1 360 310
- GB-A- 2 096 446
- US-A- 4 208 829
- US-A- 4 663 882
- US-A1- 2002 043 018
- US-A1- 2005 132 637

## Description

The present invention relates to a bait station (*eg* a rodent bait station) comprising a concealment body and cradle and a kit of parts assemblable into the bait station.

A device which can be used to monitor or control a population of rodents is a rodent bait station. A rodent bait station provides an amount of bait which is equipped to attract a rodent. The bait often includes a compound which will incapacitate the rodent if the bait is eaten. Although rodents naturally prefer not to feed inside a confined space, known bait stations usually take the form of a bait-containing manufactured box with a suitably sized entrance to allow a rodent to access the bait. The bait station may be tamper proof and inaccessible to a non-target animal larger than a rodent. US-A-2005/0132637 discloses a bait device which is accessible to rodents.

The present invention is based on the recognition that it would be advantageous to provide bait in an environment with which a rodent is familiar in a configuration which encourages exclusively a rodent to access the bait.

Thus viewed from a first aspect the present invention provides a rodent bait station comprising:
a non-neophobia inducing concealment body for concealing rodent bait in an elevated hollow environment wherein the concealment body has an incomplete substantially toroidal shape; and
a ground-engaging elevatory cradle on which is supported the concealment body at an elevation at which the hollow environment is substantially inaccessible from beneath to supra rodent-sized species.

By comprising a concealment body which is unlikely to induce neophobia in a rodent, the rodent bait station of the present invention advantageously encourages a rodent to access bait. By being ground-engaging, the cradle supports the concealment body at an elevation in an environment which is familiar to a rodent and this will advantageously enhance the tendency of the rodent to access the bait in the concealment body from the ground.

In a preferred embodiment, the concealment body is man-made. The concealment body may be man-made with a primary function which has been exhausted. An advantage of the present invention is that it allows the concealment body to be reused rather than discarded as waste.

### Typically the rodent is a rat

The concealment body may comprise a first wall. Typically the first wall is ground-facing. The concealment body may comprise a second wall opposite to and spaced apart from the first wall. The first wall and the second wall may be substantially coaxial. The first wall and the second wall may be substantially parallel or inwardly convergent. The concealment body may further comprise an outer wall which connects the first wall and the second wall. The outer wall may be connected between the outer circumferential edges of the first wall and second wall. The concealment body may comprise a first opening within the first wall. The concealment body may comprise a second opening within the second wall. The first wall, second wall and outer wall may be substantially planar. The outer wall may be convex.

Preferably the concealment body comprises:
a first apertured wall,
a second apertured wall opposite and spaced apart from the first apertured wall and
an outer (eg an outer circumferential) wall between the first apertured wall and the second apertured wall, wherein the hollow environment is bound by the first apertured wall, the second apertured wall and the outer wall. Preferably the outer wall is externally convex.

Preferably the concealment body comprises:
a first substantially annular wall,
a second substantially annular wall opposite and spaced apart from the first substantially annular wall and
an outer (*eg* an outer circumferential) wall between the first substantially annular wall and the second substantially annular wall, wherein the hollow environment is bound by the first substantially annular wall, the second substantially annular wall and the outer wall. Preferably the outer wall is externally convex.

Typically the concealment body has an open substantially toroidal shape (*eg* open inner circumferential face).

In a preferred embodiment, either or both of the first wall and second wall is adapted to retain bait.

In a preferred embodiment, either or both of the first wall and second wall terminates in an inwardly projecting lip.

The cradle may comprise a foot assembly which in use contacts the ground and supports the concealment body. Typically the cradle comprises a plurality of foot assemblies (eg two or more, preferably three or more (particularly preferably three) foot assemblies) which in use contact the ground and support the concealment body. The foot assemblies may be attached to a hub assembly.

Preferably the cradle comprises:
a hub assembly; and
a plurality of foot assemblies, each foot assembly in a first elongate portion extending substantially radially from the hub assembly and terminating in a second portion which is ground-engaging, wherein the concealment body is seated on each first elongate portion.

Particularly preferably the first elongate portion is substantially perpendicular to the second portion.

Particularly preferably the second portion is adapted or adaptable to restrain the concealment body.

Particularly preferably the first elongate portion is positionally adjustable in a radial direction from the hub assembly to permit the second portion to selectively abut and restrain the concealment body.

Particularly preferably each foot assembly is substantially T-shaped.

Particularly preferably each foot assembly is fastenable to the ground. More preferably the second portion is apertured to receive a fastener to fasten the foot assembly to the ground.

Particularly preferably the hub assembly comprises:
a hub member (*eg* a disc) with a substantially central hub aperture; and
a plurality of legs extending radially from the hub member and terminating in a distal end, wherein the distal end of each leg is engaged with a proximal end of the first elongate portion of a respective foot assembly.

The plurality of legs may be substantially coplanar. Preferably the plurality of legs extending radially from the hub member in a substantially equiangular disposition. Preferably the distal end of each leg is engaged telescopically with a proximal end of the first elongate portion of a respective foot assembly.

Each foot assembly may comprise a plurality of foot apertures which are arranged in pairs on opposite lateral faces. A pair of leg apertures may be aligned with a corresponding pair of foot apertures to allow a fastener such as a nut and bolt (not shown) to be inserted through the pair of leg apertures and the pair of foot apertures to fasten the foot assembly to the leg.

The first elongate portion and second portion of each foot assembly may be a substantially hollow bar. The hollow bar may be substantially cylindrical or (preferably) cuboidal.

In a preferred embodiment the rodent bait station further comprises:
a cover mounted on the concealment body to prevent access to the hollow environment other than from the ground.

The cover may be a cover plate. The cover may be circumferentially rimmed.

Particularly preferably the rodent bait station further comprises:
a locking device which can secure (eg secure restrainedly) the cover to the cradle.

Particularly preferably the cover is apertured and the locking device comprises:
an elongate locking shaft extending from a ground-engaging locking shaft foot at a distal end through the central hub aperture and the apertured cover to a proximal end; and
a locking element engaged with the elongate locking shaft at or near to the proximal end beyond the exterior of the cover so as to restrain the cradle, the concealment body and the cover. More preferably the elongate locking shaft foot is fastenable to the ground. Especially preferably the locking shaft foot is apertured to receive a fastener to fasten the locking shaft to the ground.

Particularly preferably the locking element is selectively engageable with the elongate locking shaft at or near to the proximal end at a plurality of axial positions. For example, the axial positions may be each be defined by an aperture with which the locking element is engageable.

Particularly preferably the elongate locking shaft comprises a locking shaft rib or skirt which is diametrically larger than the hub aperture so as to support the hub assembly. Viewed from an even further aspect the present invention provides a kit of parts assemblable into a rodent bait station as defined hereinbefore comprising:
a substantially non-neophobia inducing concealment body for concealing rodent bait in an elevated hollow environment wherein the concealment body has an incomplete substantially toroidal shape; and
a ground-engaging elevatory cradle for supporting the concealment body at an elevation at which the hollow environment is substantially inaccessible from beneath to supra rodent-sized species.

The present invention will now be described in a non-limitative sense with reference to the accompanying figures in which:
Figure 1 is an exploded view of a bait station according to an embodiment of the present invention; and
Figure 2 is an isolated view of the cradle of the of the bait station shown in figure 1.

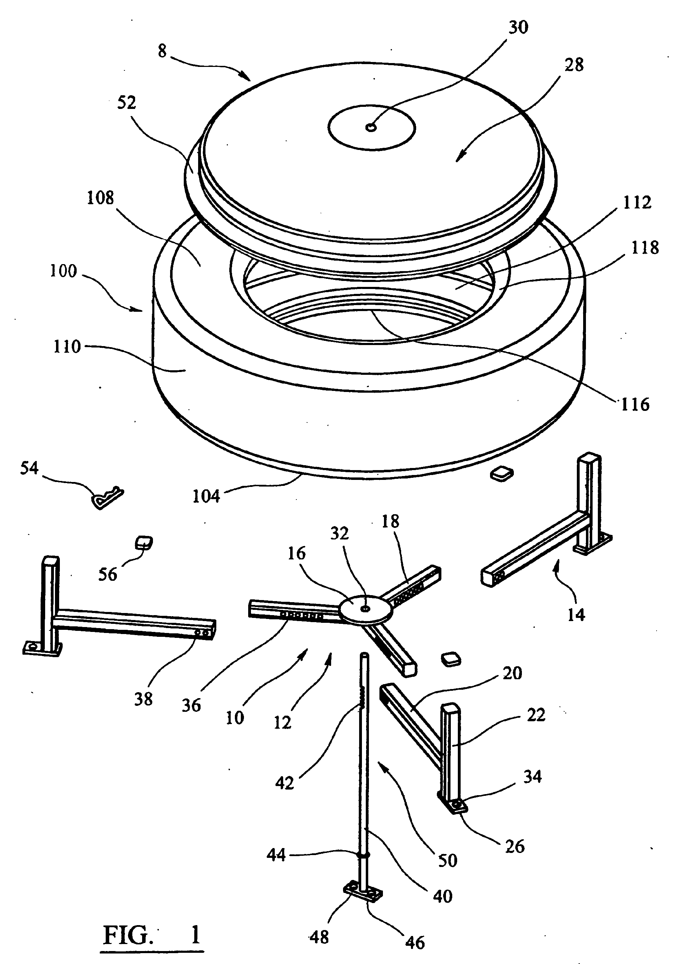

Figure 1 illustrates an embodiment of the rodent bait station 8 of the present invention which comprises in general a cradle 10, a tyre 100, a cover 28 and a locking device 50.

The tyre 100 has a generally U-shaped cross section (*ie* inwardly open toroidal shape) and comprises a first substantially annular wall 104 and a second substantially annular wall 108 opposite and spaced apart from the first wall 104 by a rolling surface 110. The tyre 100 is oriented so that when the bait station 8 is positioned on the ground, the first wall 104 is ground-facing. The tyre 100 defines a hollow inner environment 112 which is bound by the first substantially annular wall 104, the second substantially annular wall 108 and the rolling surface 110. The first substantially annular wall 104 terminates in a first inwardly projecting lip 116 and the second substantially annular wall 108 terminates in a second inwardly projecting lip 118.

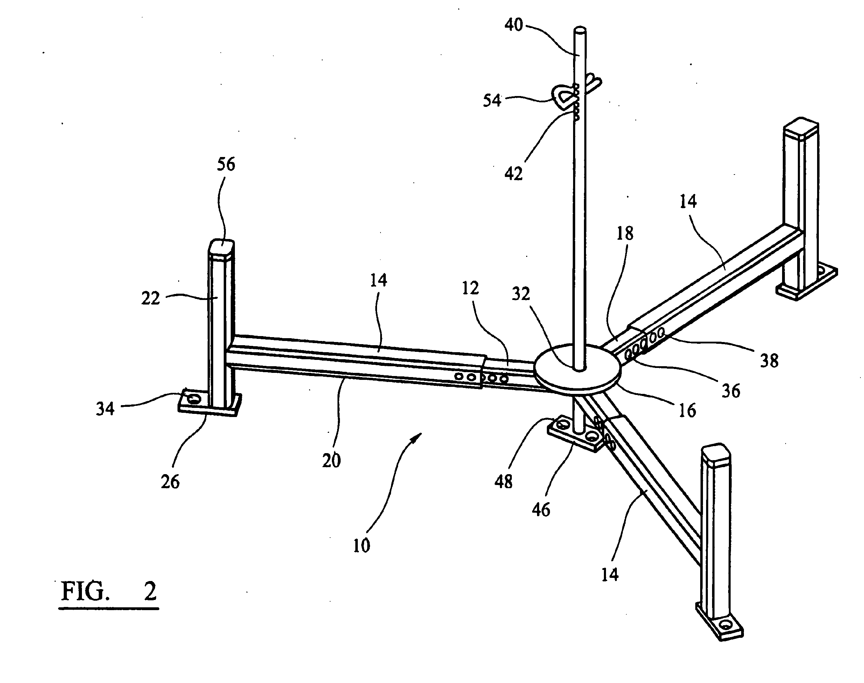

Referring to figures 1 and 2, the cradle 10 comprises a hub assembly 12 and three foot assemblies 14. The hub assembly 12 comprises a hub member 16 in the form of a disc with a substantially central hub aperture 32. Three legs 18 extend radially from the hub member 16 in an equiangular disposition and terminate in a distal end. Each leg 18 is an elongate hollow bar. The distal end of each leg 18 is received telescopically in a proximal end of a respective foot assembly 14. Each leg 18 further comprises a plurality of leg apertures 36 which are arranged in pairs on opposite lateral faces of the leg 18. Each foot assembly 14 comprises a plurality of foot apertures 38 which are arranged in pairs on opposite lateral faces of the foot assembly 14. A pair of leg apertures 36 can be aligned with a corresponding pair of foot apertures 38 to allow a fastener such as a nut and bolt (not shown) to be inserted through the pair of leg apertures 36 and the pair of foot apertures 38 to fasten the foot assembly 14 to the leg 18. The distance between the foot assemblies 14 and the hub member 16 is adjustable by selecting a different pair of leg apertures 36 to which to fasten the foot assembly 14 This permits the cradle 10 to be used with tyres 100 of various dimensions.

Each foot assembly 14 is substantially T-shaped and comprises a first foot portion 20 in the form of a hollow bar into a proximal end of which is inserted the leg 18. On the first foot portion 20 of the foot assemblies 14 is seated the tyre 100. Each foot assembly 14 further comprises a second foot portion 22 substantially perpendicular to the first foot portion 20 which serves to retain the tyre 100 by abutting the rolling surface 110. The first end of the second foot portion 20 terminates in a ground plate 26. The ground plate 26 comprises a ground plate aperture 34 through which a fastener such as a peg or screw can be used to fasten the foot assembly 14 to the ground. An end cap 56 is inserted into a second end of the second foot portion 22 opposite to the first end to protect the user from any sharp edges (see figure 2).

The cover 28 is generally disc-shaped and comprises a cover rim 52 and a cover aperture 30. The cover 28 is mounted on the second wall 108 of the tyre 100.

The locking device 50 comprises an elongate locking shaft 40 and a locking pin 54. The elongate locking shaft 40 comprises a plurality of locking shaft apertures 42, a circumferential locking shaft rib 44 and a terminal locking shaft foot 46. When the bait station 8 is in use the elongate locking shaft 40 is located centrally within the bait station and extends longitudinally from the ground through the hub aperture 32 and the cover aperture 30. The locking shaft foot 46 is ground engaging and comprises a pair of locking shaft foot apertures 48 through which fasteners such as a peg or screw can be used to fasten the locking shaft 40 to the ground. The locking shaft 40 further comprises a locking shaft rib 44 which is diametrically larger than the hub aperture 32 so as to support the hub assembly 12. The locking shaft apertures 42 above the cover 28 allow the locking pin 54 to be inserted through the locking shaft 40 to prevent the cover 28 from being lifted off the locking shaft 40. In this way, the cover 28 is secured restrainedly to the cradle 10 and the tyre 100. The locking pin 54 can be selectively inserted through a different one of the locking shaft apertures 42 depending on the width of the tyre 100 to ensure a tight fit between the cover 28 and the tyre 100.

In order to assemble a rat bait station of the invention, a new or used tyre 100 is selected. The cradle 10 is assembled by fastening the three foot assemblies 14 to the legs 18 of the hub assembly 12 using suitable leg apertures 36 to ensure that the second foot portions 22 are spaced at a radial distance sufficient to abut the rolling surface 110 of the tyre 100. The locking shaft 40 is placed at the centre of the area of ground where the bait station 8 is to be positioned and the locking shaft foot 46 is fastened to the ground via the locking shaft foot apertures 48 using suitable fasteners. The cradle 10 is placed on the locking shaft 40 with the locking shaft 40 extending through the hub aperture 32. The cradle 10 is secured to the ground using suitable fasteners in the ground plate apertures 34 on the foot assemblies 14.

The tyre 100 is placed on the cradle 10 so that the rolling surface 110 of the tyre 100 abuts the second foot portions 22. An amount of bait (not shown) is placed in the hollow interior 112 of the tyre 100 so that the bait is resting on the interior of the first wall 104 and is retained by the first side lip 116.

The cover 28 is placed on the second wall 108 of the tyre 100 with the locking shaft 40 extending through the cover aperture 30. The locking pin 54 is inserted through the locking shaft aperture 42 which is nearest to the upper surface of the cover 28 to secure the cover 28 in place.

A rodent accesses the bait by crawling through the gap between the first wall 104 of tyre 100 and the ground. The height of the second foot portion 22 is such that the gap between the first wall 104 of tyre 100 and the ground is small enough for a rodent (such as a rat) to crawl through but is too small for any larger animal (such as a dog). Once through the gap, the rodent can climb up on the first side lip 116 of the tyre 100 to access and consume the bait in the hollow environment 112.

## Claims

1. A rodent bait station (8) comprising:
a non-neophobia inducing concealment body (100) for concealing rodent bait in an elevated hollow environment; and
a ground-engaging elevatory cradle (10) on which is supported the concealment body at an elevation at which the hollow environment is substantially inaccessible from beneath to supra rodent-sized species, **characterized in that** the concealment body has an incomplete substantially toroidal shape

2. A rodent bait station (8) as claimed in claim 1 wherein the concealment body (100) comprises:
a first apertured wall (104);
a second apertured wall (108) opposite and spaced apart from the first apertured wall; and
an outer wall (110) between the first apertured wall and the second apertured wall, wherein the hollow environment is bound by the first apertured wall, the second apertured wall and the outer wall.

3. A rodent bait station (8) as claimed in claim 1 or 2 wherein the concealment body (100) comprises:
a first substantially annular wall (104);
a second substantially annular wall (108) opposite and spaced apart from the first substantially annular wall; and
an outer wall (110) between the first substantially annular wall and the second substantially annular wall, wherein the hollow environment is bound by the first substantially annular wall, the second substantially annular wall and the outer wall.

4. A rodent bait station (8) as claimed in claim 2 or 3 wherein the outer wall (110) is externally convex.

5. A rodent bait station (8) as claimed in any of claims 2 to 4 wherein either or both of the first wall (104) and second wall (108) is adapted to retain bait.

6. A rodent bait station (8) as claimed in any of claims 2 to 5 wherein either or both of the first wall (104) and second wall (108) terminates in an inwardly projecting lip.

7. A rodent bait station (8) as claimed in any preceding claim wherein the cradle (10) comprises:
a hub assembly (12); and
a plurality of foot assemblies (14), each foot assembly comprising a first elongate portion (20) extending substantially radially from the hub assembly and terminating in a second portion (22) which is ground-engaging, wherein the concealment body is seated on each first elongate portion.

8. A rodent bait station (8) as claimed in claim 7 wherein the second portion (22) is adapted or adaptable to restrain the concealment body.

9. A rodent bait station (8) as claimed in claim 7 or 8 wherein each foot assembly (14) is fastenable to the ground.

10. A rodent bait station (8) as claimed in any preceding claim further comprising:
a cover (28) mounted on the concealment body (100) to prevent access to the hollow environment other than from the ground.

11. A rodent bait station (8) as claimed in claim 10 further comprising:
a locking device (50) which can secure the cover to the cradle (10).

12. A rodent bait station (8) as claimed in claim 10 or 11 wherein the cover (28) is apertured and the locking device (50) comprises:
an elongate locking shaft (40) extending from a ground-engaging locking shaft foot (46) at a distal end through a central hub aperture and the apertured cover to a proximal end; and
a locking element (54) engaged with the elongate locking shaft at or near to the proximal end beyond the exterior of the cover so as to restrain the cradle, the concealment body and the cover.

13. A rodent bait station (8) as claimed in claim 12 wherein the elongate locking shaft foot (46) is fastenable to the ground.

14. A rodent bait station (8) as claimed in any preceding claim in which the concealment body (100) comprises a tyre.

15. A kit of parts assemblable into a rodent bait station (8) as defined in any of claims 1 to 14 comprising:
a non-neophobia inducing concealment body (100) for concealing rodent bait in an elevated hollow environment wherein the concealment body has an incomplete substantially toroidal shape; and
a ground-engaging elevatory cradle (10) for supporting the concealment body at an elevation at which the hollow environment is substantially inaccessible from beneath to supra rodent-sized species.

## Patentansprüche

1. Nagetier-Köderstation (8), die umfasst:
einen Verbergekörper (100), der keine Neophobie induziert, um Nagetierköder in einer erhöhten hohlen Umgebung zu verbergen; und
ein den Boden berührendes erhöhendes Gerüst (10), auf welchem der Verbergekörper bei einer Erhöhung gestützt ist, bei der die hohle Umgebung von unten im Wesentlichen nicht zugänglich für Spezies ist, die größer als Nagetiere sind, **dadurch gekennzeichnet, dass** der Verbergekörper eine nicht vollständige im Wesentlichen toroid-förmige Form hat.

2. Nagetier-Köderstation (8) wie in Anspruch 1 beansprucht, wobei der Verbergekörper (100) umfasst:
eine erste mit einer Öffnung versehene Wand (104);
eine zweite mit einer Öffnung versehene Wand (108), die gegenüber der ersten mit einer Öffnung versehenen Wand liegt und von dieser beabstandet ist; und
eine äußere Wand (110) zwischen der ersten mit einer Öffnung versehenen Wand und der zweiten mit einer Öffnung versehenen Wand, wobei die hohle Umgebung durch die erste mit einer Öffnung versehenen Wand, die zweite mit einer Öffnung versehenen Wand und die äußere Wand begrenzt ist.

3. Nagetier-Köderstation (8) wie in Anspruch 1 oder 2 beansprucht, wobei der Verbergekörper (100) umfasst:
eine erste im Wesentlichen ringförmige Wand (104);
eine zweite im Wesentlichen ringförmige Wand (108), die gegenüber der ersten im Wesentlichen ringförmigen Wand liegt und von dieser beabstandet ist; und
eine äußere Wand (110) zwischen der ersten im Wesentlichen ringförmigen Wand und der zweiten im Wesentlichen ringförmigen Wand, wobei die hohle Umgebung durch die erste im Wesentlichen ringförmige Wand, die zweite im Wesentlichen ringförmige Wand und die äußere Wand begrenzt ist.

4. Nagetier-Köderstation (8) wie in Anspruch 2 oder 3 beansprucht, wobei die äußere Wand (110) außen konvex ist.

5. Nagetier-Köderstation (8) wie in einem der Ansprüche 2 bis 4 beansprucht, wobei eine oder beide von der ersten Wand (104) und der zweiten Wand (108) eingerichtet sind, um Nagetiere zurückzuhalten.

6. Nagetier-Köderstation (8) wie in einem der Ansprüche 2 bis 5 beansprucht, wobei eine oder beide von der ersten Wand (104) und der zweiten Wand (108) in einer nach innen hervorstehenden Umlaufkante enden.

7. Nagetier-Köderstation (8) wie in einem der voranstehenden Ansprüche beansprucht, wobei das Gerüst (10) umfasst:
eine Zentralanordnung (12); und
eine Vielzahl von Fußanordnungen (14), wobei jede Fußanordnung einen ersten länglichen Abschnitt (20), der sich im Wesentlichen radial von der Zentralanordnung erstreckt und in einem zweiten Abschnitt (22), der den Boden berührt, endet, umfasst, wobei der Verbergekörper auf jedem ersten länglichen Abschnitt aufsitzt.

8. Nagetier-Köderstation (8) wie in Anspruch 7 beansprucht, wobei der zweite Abschnitt (22) eingerichtet ist oder eingerichtet werden kann, um den Verbergekörper zurückzuhalten.

9. Nagetier-Köderstation (8) wie in Anspruch 7 oder 8 beansprucht, wobei jede Fußanordnung (14) an dem Boden befestigt werden kann.

10. Nagetier-Köderstation (8) wie in einem voranstehenden Anspruch beansprucht, weiterhin umfassend:
eine Abdeckung (28), die auf dem Verbergekörper (100) befestigt ist, um Zugang zu der hohlen Umgebung anders als von dem Boden aus zu verhindern.

11. Nagetier-Köderstation (8) wie in Anspruch 10 beansprucht, weiterhin umfassend:
eine Verriegelungsvorrichtung (50), welche die Abdeckung an dem Gerüst (10) fest befestigen kann.

12. Nagetier-Köderstation (8) wie in Anspruch 10 oder 11 beansprucht, wobei die Abdeckung (28) mit einer Öffnung versehen ist und die Verriegelungsvorrichtung (50) umfasst:
einen länglichen Verriegelungsschaft (40), welcher sich von einem den Boden berührenden Verriegelungsschaft-Fuß (46) an einem distalen Ende durch eine Zentralöffnung und die mit einer Öffnung versehenen Abdeckung zu einem proximalen Ende erstreckt; und
ein Verriegelungselement (54), welches mit dem länglichen Verriegelungsschaft bei oder nahe des proximalen Endes außerhalb des Äußeren der Abdeckung eingreift, um derart das Gerüst, den Verbergekörper und die Abdeckung zurückzuhalten.

13. Nagetier-Köderstation (8) wie in Anspruch 12 beansprucht, wobei der längliche Verriegelungsschaft-Fuß (46) an dem Boden befestigt werden kann.

14. Nagetier-Köderstation (8) wie in einem voranstehenden Anspruch beansprucht, bei welcher der Verbergekörper (100) einen Reifen umfasst.

15. Teilesatz, der zu einer Nagetier-Köderstation (8) wie in einem der Ansprüche 1 bis 14 definiert, zusammengesetzt werden kann, der umfasst:
einen Verbergekörper (100), der keine Neophobie induziert, um Nagetierköder in einer erhöhten hohlen Umgebung zu verbergen, wobei der Verbergekörper eine nicht vollständige im Wesentliche toroid-förmige Form hat; und
ein den Boden berührendes erhöhendes Gerüst (10), um den Verbergekörper bei einer Erhöhung zu stützen, bei welcher die hohle Umgebung von unten im Wesentlichen nicht zugänglich für Spezies ist, die größer als Nagetiere sind.

## Revendications

1. Poste d'appât pour rongeurs (8) comprenant :
un corps de dissimulation n'induisant pas une néophobie (100) pour dissimuler l'appât pour rongeurs dans un environnement creux surélevé, et
un berceau d'élévation en contact avec le sol (10), sur lequel repose le corps de dissimulation à une hauteur à laquelle l'environnement creux est sensiblement inaccessible depuis le dessous à des espèces de rongeur de très grande taille, **caractérisé en ce que** le corps de dissimulation présente une forme sensiblement toroïdale incomplète.

2. Poste d'appât pour rongeurs (8) selon la revendication 1, dans lequel le corps de dissimulation (100) comprend :
une première paroi à ouverture (104) ;
une seconde paroi à ouverture (108) opposée et espacée de la première ; et
une paroi extérieure (110) entre la première paroi à ouverture et la seconde paroi à ouverture, dans lequel l'environnement creux est lié par la première paroi à ouverture, la seconde paroi à ouverture et la paroi extérieure.

3. Poste d'appât pour rongeurs (8) selon la revendication 1 ou 2, dans lequel le corps de dissimulation (100) comprend :
une première paroi sensiblement annulaire (104) ;
une seconde paroi sensiblement annulaire (108) opposée et espacée de la première ; et
une paroi extérieure (110) entre la première paroi sensiblement annulaire et la seconde paroi sensiblement annulaire, dans lequel l'environnement creux est lié par la première paroi sensiblement annulaire, la seconde paroi sensiblement annulaire et la paroi extérieure.

4. Poste d'appât pour rongeurs (8) selon la revendication 2 ou 3, dans lequel la paroi extérieure (110) est extérieurement convexe.

5. Poste d'appât pour rongeurs (8) selon l'une quelconque des revendications 2 à 4, dans lequel une ou les deux premières parois (104) et secondes parois (108) sont adaptées pour retenir l'appât.

6. Poste d'appât pour rongeurs (8) selon l'une quelconque des revendications 2 à 5, dans lequel une ou les deux premières parois (104) et secondes parois (108) se terminent en une lèvre en saillie vers l'intérieur.

7. Poste d'appât pour rongeurs (8) selon l'une quelconque des revendications précédentes, dans lequel le berceau (10) comprend :
un ensemble de moyeu (12) ; et
une pluralité d'ensembles de pied (14), chaque ensemble de pied comprenant une première partie allongée (20) s'étendant sensiblement radialement depuis l'ensemble de moyeu et se terminant dans une seconde partie (22) qui est en contact avec le sol, dans lequel le corps de dissimulation est logé sur chaque première partie allongée.

8. Poste d'appât pour rongeurs (8) selon la revendication 7, dans lequel la seconde partie (22) est ou peut être adaptée pour retenir le corps de dissimulation.

9. Poste d'appât pour rongeurs (8) selon la revendication 7 ou 8, dans lequel chaque ensemble de pied (14) peut être fixé au sol.

10. Poste d'appât pour rongeurs (8) selon l'une quelconque des revendications précédentes, comprenant en outre :
un couvercle (28) monté sur le corps de dissimulation (100) pour empêcher l'accès à l'environnement creux autrement que depuis le sol.

11. Poste d'appât pour rongeurs (8) selon la revendication 10, comprenant en outre :
un dispositif de verrouillage (50) qui peut bloquer le couvercle sur le berceau (10).

12. Poste d'appât pour rongeurs (8) selon la revendication 10 ou 11, dans lequel le couvercle (28) est à ouverture et le dispositif de verrouillage (50) comprend :
un arbre de verrouillage allongé (40) s'étendant depuis un pied d'arbre de verrouillage en contact avec le sol (46) sur une extrémité distale au travers d'une ouverture de moyeu central et du couvercle à ouverture sur une extrémité proximale ; et
un élément de verrouillage (54) engagé avec l'arbre de verrouillage allongé sur ou près de l'extrémité proximale au-delà de l'extérieur du couvercle de sorte à retenir le berceau, le corps de dissimulation et le couvercle.

13. Poste d'appât pour rongeurs (8) selon la revendication 12, dans lequel le pied d'arbre de verrouillage allongé (46) est fixable au sol.

14. Poste d'appât pour rongeurs (8) selon l'une quelconque des revendications précédentes, dans lequel le corps de dissimulation (100) comprend un pneu.

15. Kit de parties assemblables en un poste d'appât pour rongeurs (8) selon l'une quelconque des revendications 1 à 14, comprenant :
un corps de dissimulation n'induisant pas une néophobie (100) pour dissimuler l'appât dans un environnement creux surélevé, dans lequel le corps de dissimulation présente une forme sensiblement toroïdale incomplète ; et
un berceau d'élévation en contact avec le sol (10) sur lequel repose le corps de dissimulation à une hauteur à laquelle l'environnement creux est sensiblement inaccessible depuis le dessous à des espèces de rongeur de très grande taille.
